# EUROPÄISCHE PATENTSCHRIFT

(11) **EP 0 804 698 B1**
(45) Veröffentlichungstag und Bekanntmachung des Hinweises auf die Patenterteilung: **17.03.1999**
(21) Anmeldenummer: 95943225.3
(22) Anmeldetag: 29.12.1995
(51) Int. Cl.: F16K 31/60, F16B 21/09

(54) **GRIFF FÜR EINE SANITÄRARMATUR**
HANDLE FOR SANITARY TAPWARE
POIGNEE POUR ROBINET SANITAIRE

(30) Priorität: 16.01.1995 DE 19501059
(43) Veröffentlichungstag der Anmeldung: 05.11.1997
(73) Patentinhaber: IDEAL-STANDARD GMBH, 53121 Bonn (DE)
(72) Erfinder: THUL, Alfons, D-57635 Mehren (DE)
(74) Vertreter: Gesthuysen, Hans Dieter, Dipl.-Ing.
(86) Internationale Anmeldenummer: EP9505156
(87) Internationale Veröffentlichungsnummer: WO9622483

(56) Entgegenhaltungen:
- DE-A- 2 808 349
- DE-A- 3 233 152
- DE-A- 4 113 878

## Beschreibung

Die Erfindung betrifft einen Griff für eine Sanitärarmatur, insbesondere Einhebel-Sanitärarmatur, mit einem Griffgrundkörper und einer Griffkappe, wobei der Griffgrundkörper einen Griffabschnitt und einen Befestigungsabschnitt aufweist, die Griffkappe in einem abzudeckenden Bereich auf der Oberseite des Griffabschnittes und/oder des Befestigungsabschnittes an dem Griffgrundkörper lösbar befestigbar ist.

Ein Griff der eingangs genannten Art mit einem Griffgrundkörper und einer Griffkappe bei einer Einhebel-Sanitärarmatur ist bereits aus der DE 32 33 152 C2 bekannt. Die Griffkappe hat grundsätzlich zweierlei Aufgaben. Zum einen dient sie zum Abdecken der Befestigungs- bzw. Verbindungsstelle des Griffgrundkörpers mit dem Grundkörper der Sanitärarmatur. Zum anderen dient sie designerischen bzw. gestalterischen Zwecken. Die Griffkappe kann eine andere Farbe als der Griffgrundkörper haben, aus einem anderen Material bestehen oder aber mit einer bestimmten Oberflächengestaltung (einschließlich Werbefläche) versehen sein.

Bei dem bekannten Griff ist die lösbare Verbindung der Griffkappe mit dem Griffgrundkörper derart, daß diese beiden Bauteile unmittelbar beim Aufsetzen aufeinander miteinander verrastet werden. Allerdings kann es bei der Montage einer Sanitärarmatur dazu kommen, daß die zunächst aufgerastete Griffkappe wieder gelöst werden muß, was recht schwierig sein kann. Zu berücksichtigen ist, daß sich in der Regel zwischen der Griffkappe und dem Griffgrundkörper eine Dichtung befindet. Um eine ausreichende Abdichtwirkung zwischen den beiden zuvor genannten Bauteilen zu erzielen, muß die Rastverbindung entsprechend dimensioniert sein. Gegebenenfalls muß zum Lösen der Verrastung ein Werkzeug benutzt werden. In jedem Falle kann es beim Lösen der Verrastung zu einer Beschädigung der Rastverbindung oder - insbesondere bei Verwendung eines Werkzeuges - zu einer Beschädigung des Griffgrundkörpers und/oder der Griffkappe kommen.

Die Erfindung geht nun einen neuen Weg und vermeidet die vorgenannten Nachteile. Erfindungsgemäß ist bei einem Griff der eingangs genannten Art vorgesehen, daß am Griffgrundkörper und an der Griffkappe miteinander korrespondierende Arretiermittel vorgesehen sind, die zum Verbinden des Griffgrundkörpers und der Griffkappe derart zusammenwirken, daß die Griffkappe zunächst in Richtung auf den abzudeckenden Bereich des Griffgrundkörpers aufsetzbar und anschließend etwa quer zur Aufsetzrichtung unter Erzielung einer Klemmwirkung zwischen den Arretiermitteln in Verschieberichtung verschiebbar ist, bis die Griffkappe den abzudeckenden Bereich im wesentlichen vollständig überdeckt. Die lösbare Befestigung der Griffkappe am Griffgrundkörper beruht bei der vorliegenden Erfindung auf einem gegenüber dem Stand der Technik (Verrasten) völlig anderen Prinzip. Dieses neue Prinzip bei einem Griff für eine Sanitärarmatur "Aufsetzen von oben und Verschieben quer dazu" ermöglicht problemlos ein wiederholtes Lösen und Verbinden der Griffkappe von bzw. mit dem Griffgrundkörper, ohne daß die Gefahr der Beschädigung der Arretiermittel, der Griffkappe oder des Griffgrundkörpers besteht. Gleichzeitig kann bei Verwendung einer Dichtung zwischen der Griffkappe und dem Griffgrundkörper eine gute Dichtwirkung zwischen diesen beiden Bauteilen durch entsprechende Ausbildung der Arretiermittel ohne weiteres sichergestellt werden.

Bei einer konstruktiv relativ einfachen Ausführungsform zur Verwirklichung des obengenannten Prinzips ist als erstes Arretiermittel wenigstens ein Schenkel vorgesehen, der in eine sich in Verschieberichtung verengende Öffnung als korrespondierendes zweites Arretiermittel einsetzbar ist. Durch die sich verengende Öffnung, die grundsätzlich in der Griffkappe sein kann, vorzugsweise aber im Griffgrundkörper vorgesehen ist, wird sichergestellt, daß der Schenkel zunächst ohne weiteres in Aufsetzrichtung in die Öffnung eingesetzt werden kann und erst bei Bewegung in Verschieberichtung eine Klemmung erzielt wird. Dies gilt insbesondere dann, wenn die Öffnung einen ersten Öffnungsbereich mit einem Öffnungsquerschnitt aufweist, der größer ist als der korrespondierende Querschnitt des Schenkels und wenn sich an den ersten Öffnungsbereich ein zweiter Öffnungsbereich anschließt, an dessen Randbereich der Schenkel reibschlüssig anliegt.

Um ein unbeabsichtigtes Abheben der vollständig aufgesetzten Griffkappe zu verhindern, ist am Schenkel eine den Randbereich des zweiten Öffnungsbereichs im wesentlichen spielfrei untergreifende Nase vorgesehen, die dort auch reibschlüssig anliegen kann. Dies gilt insbesondere dann, wenn zwischen der Griffkappe und dem Griffgrundkörper eine Dichtung vorgesehen ist, die vorzugsweise umläuft.

Um einerseits das Verschieben der Griffkappe in Verschieberichtung zu erleichtern und um andererseits etwaige Fertigungstoleranzen auch bei einer gegebenenfalls vorgesehenen Dichtung auszugleichen, ist am Übergang des ersten Öffnungsbereichs zum zweiten Öffnungsbereich eine Abschrägung vorgesehen, während die Nase eine dem Randbereich zugewandte Schräge aufweist.

Die vorgenannten Klemmwirkung zwischen den Arretiermitteln läßt sich besonders einfach dadurch verwirklichen, daß der Schenkel federnd ausgebildet ist. Gleichzeitig können durch diese federnde Ausbildung auch ohne weiteres etwaige Fertigungstoleranzen ausgeglichen werden.

Eine sichere Klemmung ohne die Gefahr, daß sich die Griffkappe unbeabsichtigterweise auf dem Griffgrundkörper verschiebt, ergibt sich dadurch, daß zwei Schenkel und zwei Öffnungen vorgesehen sind, die vorzugsweise parallel zueinander in Verschieberichtung angeordnet sind. Gleiches läßt sich auch bei einem Schenkel durch eine entsprechend langgestreckte Ausbildung erreichen.

Die Klemmwirkung zwischen den Arretiermitteln kann vorliegend bei einem oder auch bei zwei Schenkeln beispielsweise dadurch erzielt werden, daß die Schenkelbreite geringfügig größer ist als die Breite des zweiten Öffnungsbereichs. In diesem Falle wird etwa auf gegenüberliegenden Seiten des Schenkels eine Klemmung mit dem entsprechenden Randbereich des zweiten Öffnungsbereichs erzielt. Insbesondere bei zwei Schenkeln, die dann vorzugsweise federnd ausgebildet sein sollten, bietet es sich an, wenn der Abstand der beiden einander zugewandten Schenkelflächen geringfügig kleiner ist als der Abstand der beiden inneren Flächen der Randbereiche der zweiten Öffnungsbereiche. Alternativ dazu und auf dem gleichen Lösungsprinzip beruhend, kann der Abstand der beiden einander zugewandten Schenkelflächen geringfügig größer sein als der Abstand der beiden äußeren Flächen der Randbereiche der zweiten Öffnungsbereiche.

Zur Begrenzung der Verschiebebewegung in Verschieberichtung und als technischer Abschluß zwischen Griffkappe und Griffgrundkörper bietet es sich an, wenn die Griffkappe im eingeschobenen Zustand an einem Absatz am Griffgrundkörper anschlägt. Besonders zweckmäßig ist es dabei, wenn die Griffkappe stufenlos in den Griffabschnitt übergeht, wobei zwischen diesen beiden Bauteilen dann allenfalls eine minimale Fuge sein sollte. Dies bietet sich aus reinigungstechnischen und auch aus optischen Gründen an.

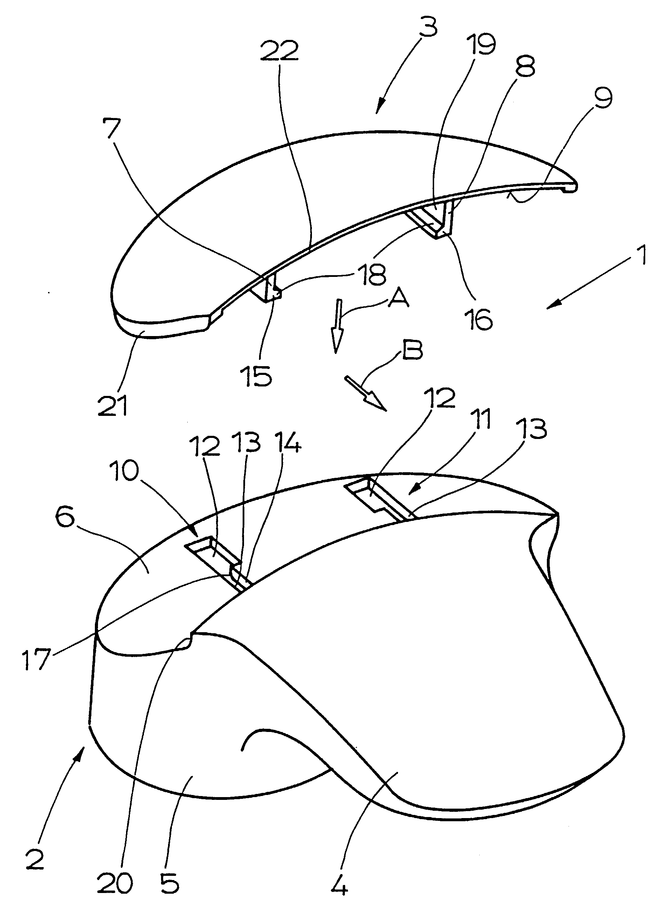

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung.

In der einzigen Figur ist perspektivisch ein Griff 1 einer nicht näher dargestellten Einhebel-Sanitärarmatur dargestellt. Der Griff 1 weist einen Griffgrundkörper 2 und eine Griffkappe 3 auf. Der Griffgrundkörper 2 wiederum weist einen Griffabschnitt 4 und einen Befestigungsabschnitt 5 auf. Der Griffabschnitt 4 dient zum Betätigen der Sanitärarmatur, während der Befestigungsabschnitt 5 im zusammengesetzten Zustand der Sanitärarmatur auf den Grundkörper der Sanitärarmatur aufgesetzt und mit diesem verbunden ist. Hierzu ist auf der Oberseite des Befestigungsabschnittes 5 üblicherweise eine - hier nicht dargestellte - Öffnung vorgesehen, durch die ein vom Grundkörper der Einhebel-Sanitärarmatur ausgehendes Verbindungselement hindurchgesteckt und im Bereich der nicht dargestellten Öffnung befestigt ist. Die Griffkappe 3 ist in einem abzudeckenden Bereich 6 mit dem Griffgrundkörper 2 lösbar verbindbar. Der abzudeckende Bereich 6 befindet sich vorliegend auf der Oberseite des Befestigungsabschnittes 5. Er kann dabei die gesamte Oberseite des Befestigungsabschnittes 5 oder auch nur einen Teil davon bedecken und kann sich gleichzeitig auch vollständig oder teilweise über die Oberseite des Griffabschnittes 4 erstrecken.

Wesentlich ist nun, daß am Griffgrundkörper 2 und an der Griffkappe 3 miteinander korrespondierende Arretiermittel vorgesehen sind, die zum Verbinden des Griffgrundkörpers 2 und der Griffkappe 3 in ganz bestimmter Art und Weise miteinander zusammenwirken, was schon durch die beiden zwischen dem Griffgrundkörper 2 und der Griffkappe 3 befindlichen Pfeile angedeutet ist. Das Verbinden über die Arretiermittel erfolgt derart, daß die Griffkappe 3 zunächst von oben in Aufsetzrichtung A auf den abzudeckenden Bereich 6 des Griffgrundkörpers 2 aufgesetzt wird. Anschließend wird die Griffkappe 3 etwa quer zur Aufsetzrichtung A in Verschieberichtung B verschoben. Dabei ergibt sich eine Klemmwirkung zwischen den Arretiermitteln. Die Verschiebung in Verschieberichtung B erfolgt so lange, bis die Griffkappe 3 den abzudeckenden Bereich 6 im wesentlichen vollständig überdeckt.

Als erstes Arretiermittel sind im dargestellten Ausführungsbeispiel zwei Schenkel 7, 8 vorgesehen, die sich von der Unterseite 9 der Griffkappe 3 erstrecken. Als zweites Arretiermittel dienen zu den Schenkeln 7, 8 korrespondierende Öffnungen 10, 11, die im abzudeckenden Bereich 6 auf der Oberseite des Befestigungsabschnittes 5 vorgesehen sind. Die Öffnungen 10, 11 weisen jeweils einen ersten Öffnungsbereich 12 mit einem Öffnungsquerschnitt auf, der größer ist als der korrespondierende (maximale) Querschnitt des Schenkels 7, 8. An den ersten Öffnungsbereich 12 schließt sich jeweils ein zweiter Öffnungsbereich 13 an, an dessen Randbereich 14 der jeweilige Schenkel 7, 8 im eingesetzten Zustand reibschlüssig anliegt.

An jedem der Schenkel 7, 8 ist eine Nase 15, 16 vorgesehen. Die Nasen 15, 16 sind aufeinander zu ausgerichtet. Jede der Nasen 15, 16 ist dabei so ausgebildet, daß sie zumindest einen Teil des Randbereichs des zweiten Öffnungsbereichs 13 im wesentlichen spielfrei untergreift. Somit ergibt sich ein Formschluß entgegen der Aufsetzrichtung A. Es kann auch eine reibschlüssige Verbindung zwischen der Nase und dem Randbereich des zweiten Öffnungsbereichs bzw. der Unterseite des abzudeckenden Bereichs 6 in Verschieberichtung vorgesehen sein.

Zwischen der Griffkappe 3 und dem Griffgrundkörper 2 kann eine Dichtung vorgesehen sein. Diese Dichtung kann einteilig mit der Dichtkappe 3 ausgebildet sein. Es kann sich aber auch um ein separates Bauteil handeln. Die Dichtung sollte zweckmäßiger Weise umlaufend ausgebildet sein.

Am Übergang des größeren ersten Öffnungsbereichs 12 zum kleineren zweiten Öffnungsbereich 13 ist eine Abschrägung 17 vorgesehen, die das Einschieben der Schenkel 7, 8 in Verschieberichtung B in den zweiten Öffnungsbereich 13 hinein erleichtert. Weiterhin ist an den Nasen 15, 16 jeweils eine dem Randbereich 14 zugewandte Schräge 18 vorgesehen.

Die Griffkappe 3 selbst kann grundsätzlich aus jedem Material bestehen. Vorzugsweise besteht sie aus Kunststoff, wobei die Schenkel 7, 8 einteilig mit der Griffkappe 3 ausgebildet sind. Vorliegend sind die Schenkel 7, 8 federnd ausgebildet. Die Klemmwirkung wird im dargestellten Ausführungsbeispiel dadurch erzielt, daß der Abstand der beiden einander zugewandten Schenkelflächen 19 geringfügig kleiner ist als der Abstand der beiden inneren Flächen der Randbereiche 14 der beiden Öffnungsbereiche 13, wodurch die Schenkel 7, 8 gegen die Randbereiche 14 gedrückt werden. Grundsätzlich läßt sich die Klemmwirkung natürlich auch in anderer Weise erzielen.

Zwischen dem Befestigungsabschnitt 5 und dem Griffabschnitt 4 befindet sich ein Absatz 20. An diesem Absatz 20 schlägt die Griffkappe 3 im eingeschobenen Zustand an. Dabei sind die Höhe des Absatzes 20 und die Griffkappe 3 derart aufeinander abgestimmt, daß die Griffkappe 3 im eingesetzten Zustand stufenlos in den Griffabschnitt 4 übergeht.

Die lösbare Verbindung zwischen der Griffkappe 3 und dem Griffgrundkörper 2 wird nun wie folgt hergestellt:

Zunächst wird die Griffkappe 3 in Aufsetzrichtung A auf den Griffgrundkörper 2 aufgesetzt. Da der erste Öffnungsbereich 12 größer ist als der maximale korrespondierende Querschnitt der Schenkel 7, 8, lassen sich diese mit ihren jeweiligen Nasen 15, 16 ohne weiteres durch den ersten Öffnungsbereich 12 hindurchführen. Die Griffkappe 3 liegt dann entweder unmittelbar mit ihrem Rand 21 auf der Oberseite des Befestigungsabschnitts 5 bzw. des abzudeckenden Abschnitts 6 oder mittelbar unter Zwischenschaltung einer Dichtung auf. Anschließend wird die Griffkappe 3 in Verschieberichtung B gedrückt. An der jeweiligen Abschrägung 17 wird der jeweilige Schenkel 7, 8 nach außen weggedrückt, wobei sich anschließend zwischen den Flächen 19 und den Randbereichen 14 ein Reibschluß ergibt. Vorzugsweise haben die beiden Schenkel 7, 8 eine in Verschieberichtung B langgestreckte Form, so daß sich recht hohe Feder- und damit Reibkräfte ergeben. Gleichzeitig kann sich ein Reibschluß zwischen den Schrägen 18 der Nasen 15, 16 und der Unterseite des Randbereichs des zweiten Öffnungsbereichs 13 ergeben, insbesondere wenn zwischen der Griffkappe 3 und dem Griffgrundkörper 2 eine Dichtung vorgesehen ist. Die Griffkappe 3 wird solange in Verschieberichtung B verschoben, bis sie mit ihrer Vorderkante 22 an dem Absatz 20 anschlägt. In diesem Zustand überdeckt die Griffkappe 3 den abzudeckenden Bereich 6 vollständig.

Das Lösen der Griffkappe 3 von dem Griffgrundkörper 2 erfolgt durch Verschieben der Griffkappe 3 entgegen der Verschieberichtung B. Sobald die Schenkel 7, 8 aus dem zweiten Öffnungsbereich 13 herausgeschoben sind und sich im ersten Öffnungsbereich 12 befinden, federn sie in ihren ursprünglichen Zustand zurück. Die Griffkappe 3 kann dann entgegen der Aufsetzrichtung A vom Griffgrundkörper 2 abgenommen werden.

Der vorgenannte Vorgang kann beliebig oft wiederholt werden, ohne daß Werkzeuge erforderlich sind oder die Gefahr der Beschädigung der Griffkappe und/oder des Griffgrundkörpers besteht.

## Patentansprüche

1. Griff (1) für eine Sanitärarmatur, insbesondere Einhebel-Sanitärarmatur, mit einem Griffgrundkörper (2) und einer Griffkappe (3), wobei der Griffgrundkörper (2) einen Griffabschnitt (4) und einen Befestigungsabschnitt (5) aufweist, und die Griffkappe (3) in einem abzudeckenden Bereich (6) auf der Oberseite des Griffabschnittes (4) und/oder des Befestigungsabschnittes (5) an dem Griffgrundkörper (2) lösbar befestigbar ist, **dadurch gekennzeichnet**, daß am Griffgrundkörper (2) und an der Griffkappe (3) miteinander korrespondierende Arretiermittel vorgesehen sind, die zum Verbinden des Griffgrundkörpers (2) und der Griffkappe (3) derart zusammenwirken, daß die Griffkappe (3) zunächst in Richtung auf den abzudeckenden Bereich (6) des Griffgrundkörpers (2) aufsetzbar und anschließend etwa quer zur Aufsetzrichtung (A) unter Erzielung einer Klemmwirkung zwischen den Arretiermitteln in Verschieberichtung (B) verschiebbar ist, bis die Griffkappe (3) den abzudeckenden Bereich (6) im wesentlichen vollständig überdeckt.

2. Griff nach Anspruch 1, dadurch gekennzeichnet, daß als erstes Arretiermittel wenigstens ein Schenkel (7, 8) vorgesehen ist, der in eine sich in Verschieberichtung (B) verengende Öffnung (10, 11) als korrespondierendes zweites Arretiermittel einsetzbar ist.

3. Griff nach einem der vorhergehenden Ansprüche, dadurch gekennzeichnet, daß die Öffnung (10, 11) einen ersten Öffnungsbereich (12) mit einem Öffnungsquerschnitt aufweist, der größer ist als der korrespondierende Querschnitt des Schenkels (7, 8).

4. Griff nach einem der vorhergehenden Ansprüche, dadurch gekennzeichnet, daß ein zweiter Öffnungsbereich (13) im Anschluß an den ersten Öffnungsbereich (12) vorgesehen ist, an dessen Randbereich (14) der Schenkel (7, 8) reibschlüssig anliegt.

5. Griff nach einem der vorhergehenden Ansprüche, dadurch gekennzeichnet, daß am Schenkel (7, 8) eine den Randbereich (14) des zweiten Öffnungsbereichs (13) im wesentlichen spielfrei untergreifende Nase (15, 16) vorgesehen ist und daß, vorzugsweise, die Nase (15, 16) reibschlüssig an der Unterseite des Randbereichs (14) anliegt.

6. Griff nach einem der vorhergehenden Ansprüche, dadurch gekennzeichnet, daß zwischen der Griffkappe (3) und dem Griffgrundkörper (2) eine vorzugsweise umlaufende Dichtung vorgesehen ist.

7. Griff nach einem der vorhergehenden Ansprüche, dadurch gekennzeichnet, daß am Übergang des ersten Öffnungsbereichs (12) zum zweiten Öffnungsbereich (13) eine Abschrägung (17) vorgesehen ist und daß, vorzugsweise, die Nase (15, 16) eine dem Randbereich (14) zugewandte Schräge (18) aufweist.

8. Griff nach einem der vorhergehenden Ansprüche, dadurch gekennzeichnet, daß der Schenkel (7, 8) federnd ausgebildet ist und, vorzugsweise, eine in Verschieberichtung (B) langgestreckte Form aufweist.

9. Griff nach einem der vorhergehenden Ansprüche, dadurch gekennzeichnet, daß zwei Schenkel (7, 8) und zwei Öffnungen (10, 11) vorgesehen sind.

10. Griff nach einem der vorhergehenden Ansprüche, dadurch gekennzeichnet, daß die Schenkelbreite geringfügig größer ist als die Breite des zweiten Öffnungsbereichs (13).

11. Griff nach einem der vorhergehenden Ansprüche, dadurch gekennzeichnet, daß der Abstand der beiden einander zugewandten Schenkelflächen (19) geringfügig kleiner ist als der Abstand der beiden inneren Flächen der Randbereiche (14) der zweiten Öffnungsbereiche (13) oder daß der Abstand der beiden einander abgewandten Schenkelflächen geringfügig größer ist als der Abstand der beiden äußeren Flächen der Randbereiche (14) der zweiten Öffnungsbereiche.

12. Griff nach einem der vorhergehenden Ansprüche, dadurch gekennzeichnet, daß die Griffkappe (3) im eingeschobenen Zustand an einem Absatz (20) am Griffgrundkörper (2) anschlägt.

13. Griff nach einem der vorhergehenden Ansprüche, dadurch gekennzeichnet, daß die Griffkappe (3) vorzugsweise stufenlos in den Griffabschnitt (4) übergeht.

14. Sanitärarmatur, insbesondere Einhebel-Sanitärarmatur, mit einem Griff (1) nach einem der vorhergehenden Ansprüche.

## Claims

1. A handle (1) for a sanitary fitting, particularly a single-lever sanitary fitting, having a handle main body (2) and a handle cap (3), wherein the handle main body (2) comprises a handle section (4) and a fixing section (5), and the handle cap (3) can be detachably fastened to the handle main body (2) in a region (6) to be covered on the upper face of the handle section (4) and/or of the fixing section (5), **characterised in that** mutually corresponding locking means are provided on the handle main body (2) and on the handle cap (3), and cooperate in order to join the handle main body (2) and the handle cap (3) in such a way that the handle cap (3) can first be fitted in the direction of the region (6) of the handle main body (2) to be covered and can subsequently be displaced approximately transversely to the direction of fitting (A) in a direction of displacement (B), with the attainment of a clamping effect between the locking means, until the handle cap (3) substantially completely conceals the region (6) to be covered.

2. A handle according to claim 1, characterised in that at least one leg (7, 8) is provided as the first locking means, which leg can be inserted in an opening (10, 11) which narrows in the direction of displacement (B), and which serves as the corresponding second locking means.

3. A handle according to either one of the preceding claims, characterised in that the opening (10, 11) has a first opening region (12) with an opening cross-section which is larger than the corresponding cross-section of the leg (7, 8).

4. A handle according to any one of the preceding claims, characterised in that a second opening region (13), against the edge region (14) of which the leg (7, 8) is seated with a frictional fit, is provided following the first opening region (12).

5. A handle according to any one of the preceding claims, characterised in that a catch (15, 16) is provided on the leg (7, 8), which catch fits under the edge region (14) of the second opening region (13) substantially free from play, and that the catch (15, 16) is preferably seated against the underside of the edge region (14) with a frictional fit.

6. A handle according to any one of the preceding claims, characterised in that a seal, preferably an encircling seal, is provided between the handle cap (3) and the handle main body (2).

7. A handle according to any one of the preceding claims, characterised in that a chamfer (17) is provided at the transition from the first opening region (12) to the second opening region (13), and that the catch (15, 16) preferably comprises a bevel (18) facing the edge region (14).

8. A handle according to any one of the preceding claims, characterised in that the leg (7, 8) is constructed with spring-like properties and is preferably of elongated shape in the direction of displacement (B).

9. A handle according to any one of the preceding claims, characterised in that two legs (7, 8) and two openings (10, 11) are provided..

10. A handle according to any one of the preceding claims, characterised in that the width of the leg is slightly greater than the width of the second opening region (13).

11. A handle according to any one of the preceding claims, characterised in that the distance between the two mutually facing leg faces (19) is slightly less than the distance between the two inner faces of the edge regions (14) of the second opening regions (13) or that the distance between the two leg faces which face away from each other is slightly greater than the distance between the two outer faces of the edge regions (14) of the second opening regions.

12. A handle according to any one of the preceding claims, characterised in that in its inserted state the handle cap strikes against a shoulder (20) on the handle main body (2).

13. A handle according to any one of the preceding claims, characterised in that the handle cap (3) preferably extends smoothly into the handle section (4).

14. A sanitary fitting, particularly a single-lever sanitary fitting, comprising a handle (1) according to any one of the preceding claims.

## Revendications

1. Poignée (1) pour une robinetterie sanitaire, en particulier une robinetterie sanitaire du type à monocommande, comprenant un corps de base de poignée (2) et un recouvrement de poignée (3), dans lequel le corps de base de poignée (2) présente une section de poignée (4) et une section de fixation (5), le recouvrement de poignée (3) pouvant venir se fixer de manière amovible sur le corps de base de poignée (2) dans une zone à recouvrir (6) sur le côté supérieur de la section de poignée (4) et/ou de la section de fixation (5), caractérisée en ce qu'on prévoit, sur le corps de base de poignée (2) et sur le recouvrement de poignée (3), des moyens de blocage correspondant l'un avec l'autre qui coopèrent pour relier le corps de base de poignée (2) et le recouvrement de poignée (3), de telle sorte que le recouvrement de poignée (3) peut d'abord venir s'appliquer dans la direction orientée vers la zone à recouvrir (6) du corps de base de poignée (2) et ensuite peut être déplacé dans la direction de déplacement (B), approximativement transversalement par rapport à la direction de montage (A), pour obtenir un effet de serrage entre les moyens de blocage jusqu'à ce que le recouvrement de poignée (3) recouvre de manière essentiellement complète la zone à recouvrir (6).

2. Poignée selon la revendication 1, caractérisée en ce qu'on prévoit, à titre de premier moyen de blocage, au moins une branche (7, 8) qui peut venir s'insérer dans une ouverture (10, 11) se rétrécissant dans la direction de déplacement (B), faisant office de second moyen de blocage correspondant.

3. Poignée selon l'une quelconque des revendications précédentes, caractérisée en ce que l'ouverture (10, 11) présente une première zone d'ouverture 12 dont la section transversale d'ouverture est supérieure à la section transversale correspondante de la branche (7, 8).

4. Poignée selon l'une quelconque des revendications précédentes, caractérisée en ce qu'on prévoit une seconde zone d'ouverture (13) contiguë à la première zone d'ouverture (12), contre la zone marginale (14) de laquelle vient se disposer la branche (7, 8) en entraînement par friction.

5. Poignée selon l'une quelconque des revendications précédentes, caractérisée en ce qu'on prévoit, sur la branche (7, 8), un tenon (15, 16) qui vient s'appliquer essentiellement en ajustage serré par-dessous la zone marginale (14) de la seconde zone d'ouverture (13), et en ce que, de préférence, le tenon (15, 16) vient se disposer en entraînement par friction contre le côté inférieur de la zone marginale (14).

6. Poignée selon l'une quelconque des revendications précédentes, caractérisée en ce qu'on prévoit entre le recouvrement de poignée (3) et le corps de base de poignée (2) un joint, de préférence périphérique.

7. Poignée selon l'une quelconque des revendications précédentes, caractérisée en ce qu'on prévoit à la transition de la première zone d'ouverture (12) à la seconde zone d'ouverture (13) un chanfrein (17), et en ce que, de préférence, le tenon (15, 16) présente un chanfrein (18) tourné vers la zone marginale (14).

8. Poignée selon l'une quelconque des revendications précédentes, caractérisée en ce que la branche (7, 8) est réalisée de manière élastique et présente de préférence une forme étirée en longueur dans la direction de déplacement (B).

9. Poignée selon l'une quelconque des revendications précédentes, caractérisée en ce qu'on prévoit deux branches (7, 8) et deux ouvertures (10, 11).

10. Poignée selon l'une quelconque des revendications précédentes, caractérisée en ce que la largeur des branches est légèrement supérieure à la largeur de la seconde zone d'ouverture (13).

11. Poignée selon l'une quelconque des revendications précédentes, caractérisée en ce que la distance entre les deux surfaces de branches (19) tournées l'une vers l'autre est légèrement inférieure à la distance entre les deux surfaces internes des zones marginales (14) des secondes zones d'ouverture (13), ou en ce que la distance entre les deux surfaces de branches se détournant l'une de l'autre est légèrement supérieure à la distance entre les deux surfaces externes des zones marginales (14) des secondes zones d'ouverture.

12. Poignée selon l'une quelconque des revendications précédentes, caractérisée en ce que le recouvrement de poignée (3), à l'état inséré, vient buter contre un épaulement (20) sur le corps de base de poignée (2).

13. Poignée selon l'une quelconque des revendications précédentes, caractérisée en ce que le recouvrement de poignée (3) se transforme, de préférence de manière progressive en section de poignée (4).

14. Robinetterie sanitaire, en particulier robinetterie sanitaire du type à monocommande comprenant une poignée (1) selon l'une quelconque des revendications précédentes.
